# EUROPEAN PATENT SPECIFICATION

(11) **EP 3 199 286 B1**
(45) Date of publication and mention of the grant of the patent: **24.03.2021**
(21) Application number: 15843817.6
(22) Date of filing: 25.09.2015
(51) Int. Cl.: H05B 3/84

(54) **SOLDER TIP, METHOD FOR MANUFACTURING GLASS SUBSTRATE WITH TERMINAL IN WHICH SOLDER TIP IS USED**
LÖTSPITZE, VERFAHREN ZUR HERSTELLUNG EINES GLASSUBSTRATS MIT ANSCHLUSS, IN DEM DIE LÖTSPITZE VERWENDET WIRD
POINTE À SOUDER ET PROCÉDÉ POUR FABRIQUER UN SUBSTRAT EN VERRE AYANT UNE BORNE DANS LEQUEL LA POINTE À SOUDER EST UTILISÉE

(30) Priority: 25.09.2014 JP 2014209427; 24.09.2015 JP 2015186650
(43) Date of publication of application: 02.08.2017
(73) Proprietor: AGC Inc., Tokyo 100-8405 (JP)
(72) Inventor: YAMAGUCHI, Masatoshi, Tokyo 143-0025 (JP); YUKI, Shinichiro, Tokyo 143-0025 (JP)
(74) Representative: Müller-Boré & Partner Patentanwälte PartG mbB
(86) International application number: PCT/JP2015/077052
(87) International publication number: WO 2016/047733

(56) References cited:
- WO-A1-2012/152542
- WO-A1-2014/079595
- DE-U1-202013 006 775
- DE-U1-202013 006 780
- DE-U1-202013 006 781
- JP-A- H0 697 642
- JP-A- H07 329 724
- JP-A- 2003 161 719
- JP-A- 2008 027 954
- US-A1- 2005 263 571

## Description

The present invention relates to a solder tip and a method for manufacturing a glass substrate having a terminal by using the solder tip.

A junction device has been known that makes a junction between an electroconductive film formed on a glass substrate and a terminal by solder (see, for example, Patent document 1). This junction device has multiple electrode sticks that are pressed against the terminal on the opposite side of the solder. By electrically heating the terminal through the electrode sticks, it is possible to heat the solder.

WO 2012/152542 A1 describes a pane having an electrical connection element. DE 20 2013 006 780 U1 also discloses a pane having an electrical connection element. WO 2014/079595 A1 relates to a disk having an electric connection element and compensator plates. DE 20 2013 006 775 U1 describes a pane having an electrical connection element and a connection bridge. DE 20 2013 006 781 U1 also discloses a pane having an electrical connection element.

Patent Document 1: U.S. Patent No. 6335514

Conventionally, solder has been placed in a hemisphere shape on the surface of an electroconductive film facing a terminal, or the surface of the terminal facing the electroconductive film, before the solder is interposed between the electroconductive film and the terminal. Therefore, pressing the heating device such as the electrode sticks against the terminal on the opposite side of the solder may make the junction forming imbalanced, and hence, a faulty junction may be generated.

In view of the above problem, it is an object of an embodiment of the present invention to provide a solder tip with which the yield of junctions can be improved.

To solve the problem, according to an aspect of the present invention, a solder tip for forming a junction between an electroconductive film formed on a glass substrate and a terminal, is provided that includes a first surface for forming surface contact with a surface of the electroconductive film facing the terminal; and a second surface for forming surface contact with a surface of the terminal facing the electroconductive film, wherein the first surface and the second surface are planes parallel to each other, the area of the first surface and the area of the second surface are greater than or equal to 26 mm², respectively, the solder tip is formed of a lead-free solder, the second surface has a housing concave part formed to contain a projection to be formed on the surface of the terminal facing the electroconductive film, and the first surface has a dummy concave part formed corresponding to the housing concave part.

According to an aspect of the present invention, a solder tip is provided with which the yield of junctions can be improved.
FIG. 1 is a cross-sectional view illustrating a solder tip and members to form a junction by using the solder tip according to an embodiment;
FIG. 2 is a partially enlarged view of FIG. 1;
FIG. 3 is a cross-sectional view illustrating a glass substrate having a terminal according to an embodiment;
FIG. 4 is a partially enlarged view of FIG. 3;
FIG. 5 is a cross-sectional view illustrating a solder tip and members to form a junction by using the solder tip according to a first modified example; and
FIG. 6 is a cross-sectional view illustrating a solder tip and members to form a junction by using the solder tip according to a second modified example.

In the following, embodiments of the present invention will be described with reference to the drawings. Throughout the drawings, the same or corresponding elements are assigned the same or corresponding reference symbols, and the description may be omitted.

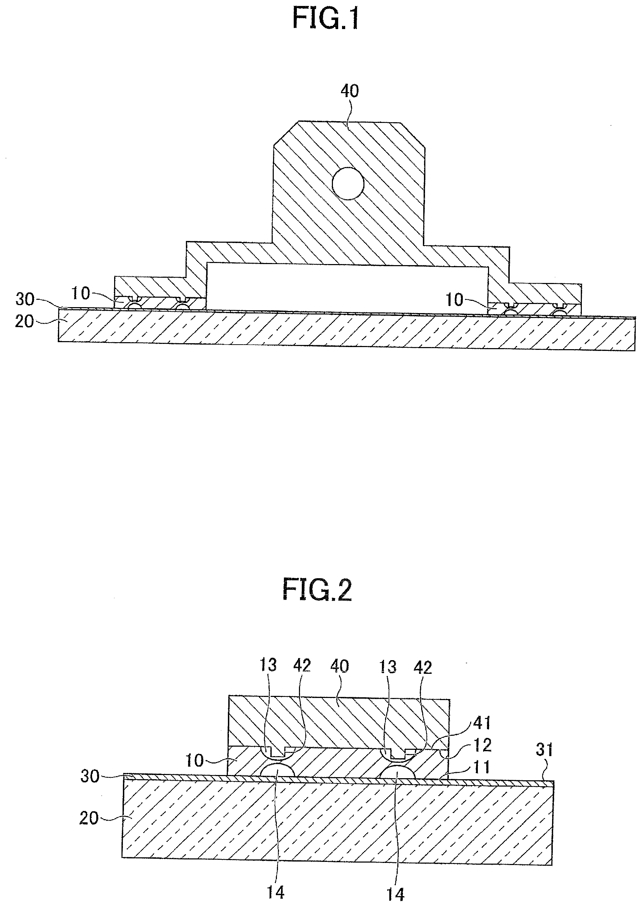

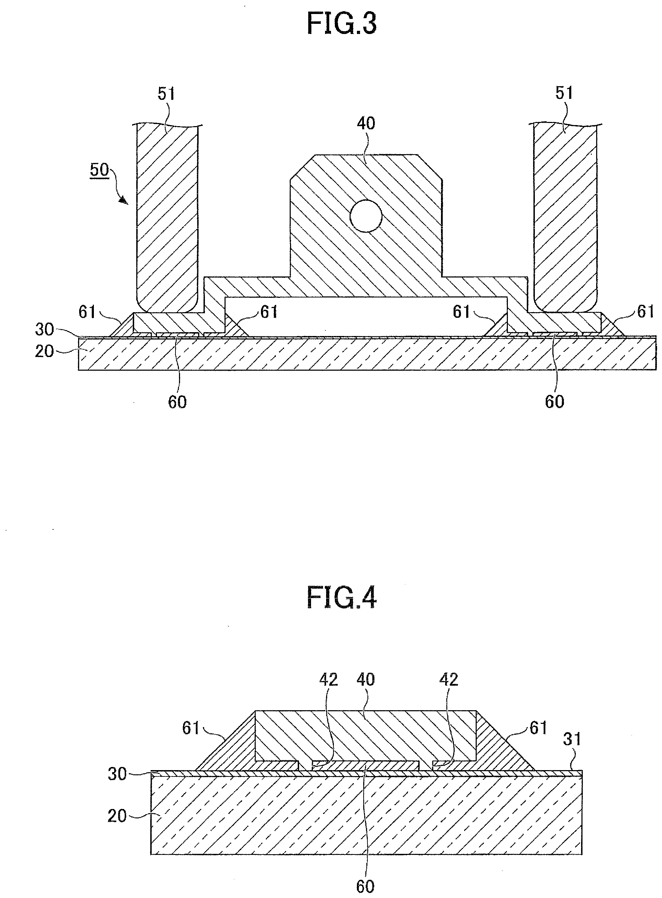

FIG. 1 is a cross-sectional view illustrating a solder tip and members to form a junction by using the solder tip according to an embodiment. FIG. 2 is a partially enlarged view of FIG. 1. FIG. 3 is a cross-sectional view illustrating a glass substrate having a terminal according to an embodiment. FIG. 4 is a partially enlarged view of FIG. 3.

As illustrated in FIGs. 1 and 2, a solder tip 10 is interposed between an electroconductive film 30 formed on a glass substrate 20 and a terminal 40, to be used for forming a junction between the electroconductive film 30 and the terminal 40. In the following, the glass substrate 20, the electroconductive film 30, the terminal 40, and the solder tip 10 will be described in this order.

The glass substrate 20 is formed by a float method, a fusion method, or the like. The glass of the glass substrate 20 is not specifically limited, and may be, for example, soda lime glass, alkali-free glass, or the like. The glass substrate 20 may be either of non-tempered glass or tempered glass. As the tempered glass, the glass substrate 20 may be either of thermally tempered glass or chemically tempered glass. The glass substrate 20 may be laminated with other glass substrates, and may be a part of the laminated glass. The application of the glass substrate 20 is not specifically limited, and may be used for, for example, window glasses for automobiles, windowpanes for railroad cars, and the like.

The electroconductive film 30 is formed on the glass substrate 20. For example, the electroconductive film 30 may be a metal film. The metal film is formed as a film by vapor deposition, sputtering, burning the metal paste, or the like. The metal film may be formed to have a desired pattern after formed as the film, or may be formed to have a desired pattern while being formed as the film. In the former case, a method of photolithography, a method of etching, or the like may be used for the pattern forming; in the latter case, a method using masking tape, a method of screen-printing or the like may be used for the pattern forming. The electroconductive film 30 forms an electric circuit, for example, a heat generating circuit, an antenna circuit, or the like. The heat generating circuit is used for melting ice and snow sticking to a windowpane, removing clouds on the windowpane due to dew condensation, and the like. The antenna circuit is used for receiving a radio wave from the outside.

The terminal 40 electrically connects an electronic part (not illustrated) to the electroconductive film 30. The terminal 40 may be formed of metal such as copper, copper alloy, and stainless steel having silver plating applied to. The type of the terminal 40 is not specifically limited, for example, may have multiple junction parts to be soldered, or may have a part formed of resin.

As mentioned above, the solder tip 10 is interposed between the electroconductive film 30 formed on the glass substrate 20 and the terminal 40, to be used for forming a junction between the electroconductive film 30 and the terminal 40. The solder tip 10, from the viewpoint of environmental load reduction, is formed of a lead-free solder. The lead-free solder may not contain silver, or may preferably contain silver because if not containing silver, metal in the solder alloy and silver in the electroconductive film 30 may form a compound, which erodes the electroconductive film 30.

In a state interposed between the electroconductive film 30 and the terminal 40, the solder tip 10 is melted by a heating device 50, and then, solidified to form a junction layer 60 as illustrated in FIG. 3. The junction layer 60 is formed between the electroconductive film 30 and the terminal 40, to form a junction between the electroconductive film 30 and the terminal 40. Fillets 61 are formed outside of the junction layer 60.

Note that the heating device 50 is pressed against the terminal 40 on the opposite side of the solder tip 10, to heat the solder tip 10. For example, the heating device 50 has multiple electrode sticks 51 to be pressed against the terminal 40 on the opposite side of the solder tip 10, to heat the solder tip 10 by electrically heating the terminal 40 through the multiple electrode sticks 51. Note that although the number of electrode sticks 51 is two in FIG. 3, the number may be three or more. Note that the heating device 50 is not specifically limited as long as it can be pressed against the terminal 40 to heat the solder tip 10.

The solder tip 10 in the embodiment has a first surface 11 for forming surface contact with a surface 31 of the electroconductive film 30 facing the terminal 40, and a second surface 12 for forming surface contact with a surface 41 of the terminal 40 facing the electroconductive film 30. In other words, the solder tip 10 forms surface contact with both the electroconductive film 30 and the terminal 40. Thus, the balance tends to be maintained while pressing the heating device 50 against the terminal 40. As a result, faulty junctions can be reduced, and the yield can be improved. Also, since the solder tip 10 and the terminal 40 form surface contact with each other, heat can be more easily transferred from the terminal 40 to the solder tip 10 compared to a case of the solder tip 10 and the terminal 40 forming point contact, and the heating efficiency of the solder tip 10 is better.

Note that as illustrated in FIGs. 2 and 4, a projection 42 is formed on the surface 41 of the terminal 40 facing the electroconductive film 30. The projection 42 may be formed by removing the material around the projection 42, or may be formed by attaching the projection 42. By having the projection 42 formed, it is possible to form the junction layer 60 having the thickness greater than or equal to the height of the projection 42. To make the thickness of the junction layer 60 constant, multiple projections 42 may be formed at intervals.

A housing concave part 13 to contain the projection 42 is formed on the second surface 12 of the solder tip 10 so that the solder tip 10 and the terminal 40 form surface contact with each other. The housing concave part 13 is formed by grinding, etching, or the like. The housing concave part 13 is formed deeper than the height of the projection 42 and formed greater than the size of the projection 42. Multiple housing concave parts 13 may be formed at intervals.

On the other hand, a dummy concave part 14 that corresponds to the housing concave part 13 is formed on the first surface 11 of the solder tip 10. The dummy concave part 14 has the same shape and the same dimensions as the housing concave part 13. This makes it possible to switch the first surface 11 of the solder tip 10 with the second surface 12 of the solder tip 10, and hence, it becomes unnecessary to manage the right side and the wrong side of the solder tip 10.

Note that although the projection 42 in the embodiment is formed on the surface 41 of the terminal 40 facing the electroconductive film 30, the projection 42 may be formed on the surface 31 of the electroconductive film 30 facing the terminal 40. In this case, the arrangement is reversed for the housing concave part 13 and the dummy concave part 14. In other words, the housing concave part 13 is formed on the first surface 11 of the solder tip 10, and the dummy concave part 14 is formed on the second surface 12 of the solder tip 10. Note that the projections 42 may be formed on both the terminal 40 and the electroconductive film 30.

The first surface 11 of the solder tip 10 and the second surface 12 of the solder tip 10 are planes parallel to each other. This tends to cause the balance to be maintained while pressing the heating device 50 against the terminal 40 because the load uniformly applies on the solder tip 10.

According to a general example not according to the present invention, if the surface 41 of the terminal 40 facing the electroconductive film 30 is formed in a V-shape in a cross-sectional view, the second surface 12 of the solder tip 10 may be also formed in the V-shape in the cross-sectional view. The solder tip 10 just needs to form surface contact with both the electroconductive film 30 and the terminal 40.

The first surface 11 of the solder tip 10 and the second surface 12 of the solder tip 10 have the area of 26 mm² or greater, respectively. This makes the bond strength of the junction layer 60 greater.

Next, a method for manufacturing a glass substrate having a terminal using the solder tip 10 will be described. The method for manufacturing a glass substrate having a terminal has the following Steps (1)-(3). At Step (1), the solder tip 10 is interposed between the electroconductive film 30 and the terminal 40, and the heating device 50 is pressed against the terminal 40 on the opposite side of the solder tip 10. At Step (2), the solder tip 10 is melted by the heating device 50. At Step (3), the melted solder tip 10 is solidified to form the junction layer 60. Thus, the glass substrate having the terminal is obtained. The glass substrate having the terminal includes the glass substrate 20, the electroconductive film 30, the terminal 40, and the junction layer 60 as illustrated in FIG. 4.

So far, the solder tip has been described with the embodiments. Note that the present invention is not limited to the above embodiments. Various modifications and improvements can be made within the scope of the present invention described in the claims.

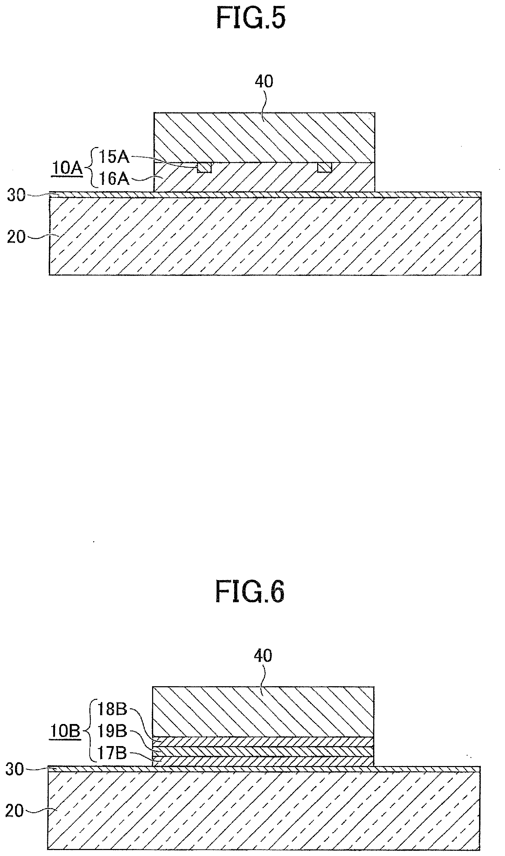

FIG. 5 is a cross-sectional view illustrating a solder tip and members to form a junction by using the solder tip according to a first modified example. A solder tip 10A according to the first modified example includes spacers 15A whose melting point is higher than the heating temperature produced by the heating device 50 (see FIG. 3) and a solder layer 16A including the spacers 15A inside. Although the spacers 15A contact the terminal 40 in FIG. 5, they may also contact the electroconductive film 30, or may not contact both the terminal 40 and the electroconductive film 30. When the solder layer 16A is melted by the heating device 50, the spacers 15A hardly melt. Thus, a junction layer is obtained having the thickness greater than or equal to the thickness of the spacers 15A. The spacers 15A are formed of metal such as copper or nickel, or ceramics. Note that the spacers 15A may be used along with the projections 42 illustrated in FIG. 3.

FIG. 6 is a cross-sectional view illustrating a solder tip and members to form a junction by using the solder tip according to a second modified example. A solder tip 10B according to the second modified example includes a first solder layer 17B that forms surface contact with the electroconductive film 30; a second solder layer 18B that forms surface contact with the terminal 40; and an intermediate solder layer 19B whose melting point is higher than the heating temperature produced by the heating device 50 (see FIG. 3). The first solder layer 17B and the second solder layer 18B are formed of materials whose melting points are lower than the heating temperature produced by the heating device 50. The first solder layer 17B and the second solder layer 18B may be formed of different materials, or preferably formed of the same material. The intermediate solder layer 19B is disposed between the first solder layer 17B and the second solder layer 18B. When the first solder layer 17B and the second solder layer 18B are melted by the heating device 50, the intermediate solder layer 19B hardly melts. Thus, a junction layer is obtained that is thicker than the intermediate solder layer 19B. Note that a barrier layer preventing diffusion may be formed between the intermediate solder layer 19B and the first solder layer 17B. Also, a barrier layer preventing diffusion may be formed between the intermediate solder layer 19B and the second solder layer 18B. The barrier layer is formed of, for example, copper, nickel, or the like.

Note that to secure the thickness of the junction layer, a device may be used for maintaining the interval between the electroconductive film 30 and the terminal 40 while heating the solder tip.

### DESCRIPTION OF THE REFERENCE SYMBOLS

- 10: solder tip
- 11: first surface
- 12: second surface
- 13: housing concave part
- 14: dummy concave part
- 20: glass substrate
- 30: electroconductive film
- 31: surface of an electroconductive film facing a terminal
- 40: terminal
- 41: surface of a terminal facing an electroconductive film
- 42: projection
- 50: heating device
- 51: electrode stick

## Claims

1. A solder tip (10) for forming a junction between an electroconductive film (30) formed on a glass substrate (20) and a terminal (40), the solder tip comprising:
a first surface (11) for forming surface contact with a surface (31) of the electroconductive film (30) facing the terminal (40); and
a second surface (12) for forming surface contact with a surface (41) of the terminal (40) facing the electroconductive film (30),
wherein the first surface (11) and the second surface (12) are planes parallel to each other,
the area of the first surface (11) and the area of the second surface (12) are greater than or equal to 26 mm², respectively,
the solder tip (10) is formed of a lead-free solder,
the second surface (12) has a housing concave part (13) formed to contain a projection (42) to be formed on the surface (41) of the terminal (40) facing the electroconductive film (30), and
the first surface (11) has a dummy concave part (14) formed corresponding to the housing concave part (13).

2. The solder tip (10) as claimed in claim 1, wherein the lead-free solder contains silver.

3. A method for manufacturing a glass substrate (20) having a terminal (40), the method comprising:
a step for interposing the solder tip (10) as claimed in claim 1 or 2 between the electroconductive film (30) and the terminal (40), and pressing a heating device (50) against the solder tip (10) on an opposite side of the terminal (40);
a step for melting the solder tip (10) by the heating device (50); and
a step for solidifying the melted solder tip (10) to form a junction layer between the electroconductive film (30) and the terminal (40).

## Patentansprüche

1. Lötspitze (10) zum Bilden einer Verbindung zwischen einem elektrisch leitenden Film (30), der auf einem Glassubstrat (20) gebildet ist, und einem Anschluss (40), wobei die Lötspitze (10) umfasst:
eine erste Oberfläche (11) zum Bilden von Oberflächenkontakt mit einer Oberfläche (31) des elektrisch leitenden Films (30), die dem Anschluss (40) gegenüberliegt; und
eine zweite Oberfläche (12) zum Bilden von Oberflächenkontakt mit einer Oberfläche (41) des Anschlusses (40), die dem elektrisch leitenden Film (30) gegenüberliegt,
wobei die erste Oberfläche (11) und die zweite Oberfläche (12) parallele Ebenen zueinander sind,
die Fläche der ersten Oberfläche (11) und die Fläche der zweiten Oberfläche (12) jeweils größer oder gleich 26 mm² sind,
die Lötspitze (10) aus einem bleifreien Lötmittel gebildet ist,
die zweite Oberfläche (12) einen konkaven Gehäuseteil (13) aufweist, der gebildet ist, um einen Vorsprung (42) aufzunehmen, der auf der Oberfläche (41) des Anschlusses (40), die dem elektrisch leitenden Film (30) gegenüberliegend ist, gebildet wird, und
die erste Oberfläche (11) einen konkaven Blindteil (14) aufweist, der entsprechend dem konkaven Gehäuseteil (13) gebildet ist.

2. Lötspitze (10) nach Anspruch 1, wobei das bleifreie Lötmittel Silber enthält.

3. Verfahren zur Herstellung eines Glassubstrats (20) mit einem Anschluss (40), wobei das Verfahren umfasst:
einen Schritt zum Einlegen der Lötspitze (10) nach Anspruch 1 oder 2 zwischen den elektrisch leitenden Film (30) und den Anschluss (40) und Drücken einer Heizvorrichtung (50) gegen die Lötspitze (10) auf einer gegenüberliegenden Seite des Anschlusses (40);
einen Schritt zum Schmelzen der Lötspitze (10) durch die Heizvorrichtung (50); und
einen Schritt zum Verfestigen der geschmolzenen Lötspitze (10), um eine Verbindungsschicht zwischen dem elektrisch leitenden Film (30) und dem Anschluss (40) zu bilden.

## Revendications

1. Pointe de soudage (10) pour former une jonction entre un film électroconducteur (30) formé sur un substrat de verre (20) et une borne (40), la pointe de soudage comprenant :
une première surface (11) pour former un contact superficiel avec une surface (31) du film électroconducteur (30) tournée vers la borne (40) ; et
une seconde surface (12) pour former un contact superficiel avec une surface (41) de la borne (40) tournée vers le film électroconducteur (30),
dans laquelle la première surface (11) et la seconde surface (12) sont des plans parallèles l'un à l'autre,
l'aire de la première surface (11) et l'aire de la seconde surface (12) sont supérieures ou égales à 26 mm², respectivement,
la pointe de soudage (10) est formée d'une brasure exempte de plomb,
la seconde surface (12) a une partie concave de logement (13) formée pour contenir une saillie (42) devant être formée sur la surface (41) de la borne (40) tournée vers le film électroconducteur (30), et
la première surface (11) a une partie concave factice (14) formée pour correspondre à la partie concave de logement (13).

2. Pointe de soudage (10) selon la revendication 1, dans laquelle la brasure exempte de plomb contient de l'argent.

3. Procédé de fabrication d'un substrat de verre (20) ayant une borne (40), le procédé comprenant :
une étape pour interposer la pointe de soudage (10) selon la revendication 1 ou 2 entre le film électroconducteur (30) et la borne (40), et presser un dispositif de chauffage (50) contre la pointe de soudage (10) sur un côté opposé de la borne (40) ;
une étape pour faire fondre la pointe de soudage (10) par le dispositif de chauffage (50) ; et
une étape pour solidifier la pointe de soudage fondue (10) pour former une couche de jonction entre le film électroconducteur (30) et la borne (40).
